# EUROPEAN PATENT SPECIFICATION

(11) **EP 3 130 442 B1**
(45) Date of publication and mention of the grant of the patent: **31.10.2018**
(21) Application number: 15180583.5
(22) Date of filing: 11.08.2015
(51) Int. Cl.: B29C 45/16, B29C 45/14

(54) **PLASTIC INJECTION DEVICE AND METHOD FOR MANUFACTURING PLASTIC PARTS**
KUNSTSTOFFEINSPRITZVORRICHTUNG UND VERFAHREN ZUM HERSTELLEN VON KUNSTSTOFFTEILEN
DISPOSITIF D'INJECTION DE MATIÈRE PLASTIQUE ET PROCÉDÉ DE FABRICATION DE PIÈCES EN PLASTIQUE

(43) Date of publication of application: 15.02.2017
(73) Proprietor: The Procter & Gamble Company, Cincinnati, OH 45202 (US)
(72) Inventor: Kotitschke, Jörg, 61476 Kronberg/Taunus (DE); Reuschenbach, Andreas, 61476 Kronberg/Taunus (DE)
(74) Representative: Schneider, Stefan Michael

(56) References cited:
- DE-A1- 2 644 175
- DE-A1- 10 104 554

## Description

### FIELD OF THE INVENTION

The present invention relates to a plastic injection device having at least one injection station for manufacturing plastic work pieces. The injection station may comprise a mold, a plurality of mold bars, which are moveable relative to the mold, and a transfer system for moving mold bars into and out of the mold. Further, the present invention relates to a method for manufacturing molded plastic parts.

### BACKGROUND OF THE INVENTION

Especially in the field of mass production of plastic parts the use of mold bars is known to manufacture a high number of component parts at the same time. The mold bars are typically part of the mold cavity and are further used for transferring the molded parts to additional working stations. For example, mold bars may be used to transfer molded plastic parts from a first injection station to a second injection station in which the molded parts can be further over-molded. Such multi-component plastic parts have application e.g. in tooth brushes and razor blade holders to achieve mechanical, visual and/or haptic advantages compared with single component plastic parts.

Transfer systems for mold bars or mold plates are known e.g. from DE 195 42 102 B4, DE 10 2004 022 821 A1 and WO 2011/061361 A2. These transfer systems have in common that each mold bar or mold plate is individually engaged by a transfer device for moving the mold bar or mold plate from one station to another. This results in relatively high complexity of the machinery and further effects the cycle time.

Further, DE 102 08 599 A1 proposes a multi-component plastic brush manufacturing machine which has a molding tool with a rotatable multi-arm index plate with molding cavities in each arm. This system reduces complexity of the machinery and reduces the cycle time; however the concept of the rotatable multi-arm index plate limits the application spectrum due to reduced variability.

Document DE 26 44 175 A1 discusses an injection molding system for thermoplastics that has a hollow shaft at right angles to the injection direction with an injection hole and nozzle in a central part. This shaft has a number of moveable halves of different molds for successive moldings, only one half being at the central position at any one time; a preheating area is located in the shaft to heat up >1 of the mold halves in readiness for injection. The mold is changed without interruption of the injection molding process, thus saving considerable time and maintaining quality of the moldings.

Therefore it is an object to provide a plastic injection device and a method for manufacturing plastic parts requiring a reduced complexity of the machinery and a low cycle time.

### SUMMARY OF THE INVENTION

In accordance with one aspect, a plastic injection device is provided in accordance with claim 1.

In accordance with one aspect, a method is provided for manufacturing plastic parts in an injection station with a mold and a feeding bar extending partially within and partially outside the mold, the method being in accordance with claim 8.

### BRIEF DESCRIPTION OF THE DRAWINGS

Further details and features of the invention may be obtained from the following description of embodiments in conjunction with the figures, which show:
- Fig. 1a: a side view on a plastic injection device according to the invention with the feeding bars in a molding position,
- Fig. 1b: the device of figure 1a with the feeding bars in a transfer position,
- Fig. 2a - 2c: views on the device of figures 1a and 1b in a first, second and third manufacturing step,
- Fig. 3a, 3b: a further device according to the invention in two different manufacturing steps,
- Fig. 4: an isometric view of a feeding bar,
- Fig. 5: a sectional view of a feeding bar with a mold bar, and
- Fig. 6: a sectional view of a feeding bar, a mold bar and a mold.

### DETAILED DESCRIPTION OF THE INVENTION

According to the present disclosure, transfer of a mold bar is not affected by individually engaging the mold bar by an actuating member but rather to provide several mold bars in a common feeding bar and to displace the mold bars by displacing one of the mold bars. In other words, a chain of several mold bars may be pushed forward within a feeding bar by pushing on only one of the mold bars. Thus, one single actuating or driving member is sufficient to displace several mold bars. Such an actuating or driving member may be relatively simple because it has to perform only a mere pushing movement.

A plastic injection device according to the present disclosure comprises at least one injection station with a mold, a plurality of mold bars, which are moveable relative to the mold, an a transfer system for moving mold bares into and out of the mold, with the transfer system comprising a feeding bar which extends partially within and partially outside the mold. The feeding bar is designed and arranged to receive and guide at least two mold bars such that movement of a first mold bar within the feeding bar may be caused by movement of a second mold bar within the same feeding bar. The mold bars may directly abut on each other. As an alternative, spacer elements may be provided interposed between mold bars such that the mold bars do not directly abut on each other.

A feeding bar according to the present disclosure is a guide rail, slide or track allowing insertion and removal of mold bars and guiding the mold bars in an axial direction of the feeding bar. In accordance with the present disclosure, the feeding bar comprises at least two sections, wherein a first section extends within the mold and the at least one further section extends outside the mold. For example, the feeding bar comprises a first section located within the mold and two further sections extending on either side of the mold. The first section is moveable with respect to the two further sections in a direction perpendicular to the longitudinal axis of the feeding bar e.g. during opening and/or closing of the mold. However, it is important that the first section located within the mold can be aligned with the at least one further section of the mold to form a continuous feeding bar allowing displacement of the mold bars.

The feeding bar may be designed to allow friction sliding movement of the mold bars within the feeding bar. Thus, the feeding bar may for example be a sliding bushing and/or may be provided with lubricant and/or may have a surface treatment, e.g. a DLC coating, reducing friction and wear. As an alternative, the mold bars may have a roller bearing within the feeding bar. Preferably, the feeding bar is designed as a floating bearing.

For example, each mold bar may comprise at least one T-shaped or dove tail sliding block and the feeding bar may comprise a guide slot extending in a guiding direction and shaped to receive the at least one T-shaped or dove tail sliding block. In a sectional view perpendicular to the guiding direction the feeding bar may have a C-shape configuration.

In some embodiments, the feeding bar and the mold bars are adapted to each other to guide the mold bars with play in at least one direction perpendicular to the guiding direction within the feeding bar. In other words, there may be a small air gap allowing displacement of the mold bars within the feeding bar without disengagement of the mold bars from the feeding bar.

There are several ways to allow insertion of mold bars into the feeding bar and to allow removal of mold bars from the feeding bar. For example, the feeding bar may be open ended to allow insertion and removal of mold bars in the guiding direction. As an alternative, the guide slot of the feeding bar may comprise at least one clearance shaped for insertion and/or removal of the at least T-shaped or dove tail sliding block in a direction inclined to the guiding direction, optionally perpendicular to the guiding direction. This embodiment has the advantage that insertion and removal of the mold bars does not interfere with an actuating or driving member for axially transferring the mold bars within the feeding bar.

The axial position of the mold bars within the feeding bar may be determined with high precision by defined displacement via the actuating or driving member. However, for precision injection molding it is also sensible if the mold bar is located in a well-defined position in the directions perpendicular to the axial guiding direction. In this respect, it is sensible if the mold bar is fixed within the mold during injection molding. According to an aspect of the present disclosure, the forces exerted to the mold bar during injection molding are not or not only reacted by the feeding bar, but also, optionally fully, by the mold and/or the injection station. In other words, although the mold bar is guided by the feeding bar during transfer, the mold bar may be fixed during injection molding irrespective of the feeding bar. This may be achieved by guiding the mold bar within the feeding bar in a floating manner, e.g. with an air gap allowing small displacement of the mold bar relative to the feeding bar to constrain the mold bar to the mold or the like during injection molding.

According to some embodiments of the present disclosure, the mold comprises two inclined support surfaces forming a tapered holder for a mold bar and the mold comprises a corresponding taped support. The corresponding tapered holder and tapered support are suitable for aligning a mold bar within the mold. The transfer system may further comprise a plunger or the like for lifting a mold bar relative to the tapered holder and the feeding bar. In other words, a plunger may be used for either pressing the tapered support of the mold bar in the tapered holder of the mold and/or to disengage the tapered support from the tapered holder for transfer movement.

Axial movement of the mold bars in the guiding direction within the feeding bar may be effected by a drive member dedicated to the feeding bar. The drive member may e.g. be designed as a plunger, as a cylinder or as a drive spindle. If more than one feeding bar is provided, the drive member may act on several mold bars provided in different feeding bars.

Further, the transfer system may comprise an actuation member dedicated to the feeding bar for displacement of a mold bar perpendicular to said feeding bar. This actuation member may be used for insertion and/or removal of a mold bar. Again, the actuation member may be kept quite simple to perform mainly an axial movement. However, more complex actuation members may be provided if required.

In some embodiments of the plastic injection device, the feeding bar extends from the mold to at least one further mold, a mold bar insertion station, a mold bar removal station, a cooling station, a heating station, a printing station and/or a machining station. In other words, the concept of the feeding bar guiding several mold bars is not limited to insertion of a single mold bar into a mold and removal of this mold bar from the mold. Rather, a single feeding bar may extend to several stations of the plastic injection device with the transfer system providing synchronized and intermitted displacement of the mold bars from one station to another. For example, the space between two stations may be designed longer to allow cooling and/or heating of the molded plastic parts, if required. As an alternative, two stations of the plastic injection device may be arranged directly next to each other such that a mold bar is transferred from one station directly into the next station, if desired.

The movement of the mold bars within the feeding bar is not limited to an axial movement in a single guiding direction. Rather, a reciprocal movement of a mold bar may occur, if desired. In addition, it is possible to arrange several feeding bars and to provide a transfer system allowing removing a mold bar from one feeding bar and inserting into another feeding bar. This may be advantageous if two injection molding stations are provided above each other rather than next to each other. In other words, the path of a mold bar through the plastic injection device may be linear or may be meandering with several feeding bars.

A method for a manufacturing plastic parts according to the disclosure comprises the steps of introducing a fist mold bar into the feeding bar, moving the first mold bar which is guided in the feeding bar in a first axial direction into the mold, injection molding at least one plastic part within the mold, moving the first mold, which is guided in the feeding bar, together with the at least one plastic part out of the mold and removing the at least one plastic part from the first mold bar and/or removing the first mold bar from the feeding bar, wherein movement of the first mold bar during the steps of introducing the mold bar into the mold and/or removing the mold bar from the mold is caused or effected by axial movement of a second mold bar which is guided in the same feeding bar and acts directly or indirectly on the first mold bar.

According to some embodiments of the present disclosure, the first mold bar may be in a transport position lifted relative to the feeding bar at least during insertion of the mold bar into the mold and/or removal of the first mold bar from the mold. Further, during injection molding the first mold bar is usually in a centered position engaging a holder of the mold.

The method of the present disclosure may comprise the additional step of feeding back the first mold bar into a position allowing re-introducing the first mold bar into the feeding bar after removal of the at least one plastic part from the mold bar and/or after removal of the first mold bar from the feeding bar. In other words, a mold bar may be transferred in a closed cycle which may also include a cleaning station for the mold bar.

After the step of injection molding at least one plastic part the first mold bar may be introduced to at least one further mold, a cooling station, a heating station, a printing station and/or machining station wherein said movement of the mold is effected or caused by axial movement of the second mold bar and/or a further mold bar which is guided in the same feeding bar and acts directly or indirectly on the first mold bar. As an alternative, after removal of the first mold bar from the feeding bar, the first mold bar may thereafter be removed to and introduced into a further feeding bar and moved while being guided in the further feeding bar to at least one further mold, a cooling station, a heating station, a printing station and/or a machining station wherein said axial movement of the first mold bar within the further feeding bar is effected or caused by axial movement of a second and/or a further mold bar which is also guided in said further feeding bar and acts directly and indirectly on the first mold bar.

According to the present disclosure, the feeding bar comprises at least two sections wherein a first section extends within the mold and the at least one further section extends outside the mold with the first section being moved relative to the mold prior to and/or after the step of injection molding at least one plastic part. The first section is aligned with the at least one further section after the step of injection molding at least one plastic part.

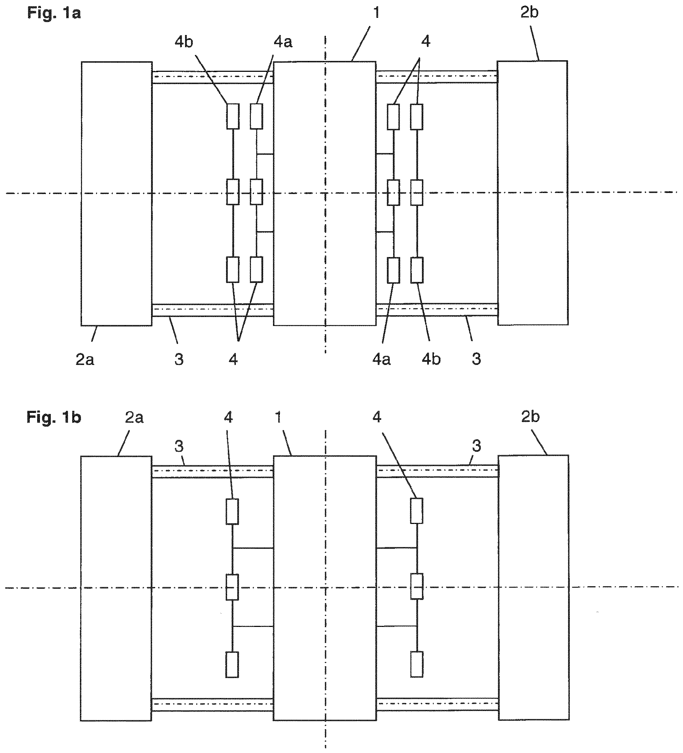

Figures 1a and 1b depict a side view on a plastic injection device with a fixed middle block 1 and two lateral injection stations 2a, 2b which are moveable with respect to the middle block to open and close a mold. The lateral injection stations 2a, 2b are actuated via cylinders 3. The middle block 1 and/or the lateral injection stations 2a, 2b comprise mold cavities which are not shown in the figures. Figures 1a and 1b both show the plastic injection device in an open state with both lateral injection stations 2a, 2b spaced from the middle block 1.

Feeding bars 4 are provided on either side of the middle block 1. Each feeding bar 4 is a longitudinal track extending perpendicular to the plane of the drawing. In the example embodiment of figure 1a, there are three levels of feeding bars 4 located above each other. Each of the feeding bars 4 comprises at least two sections 4a, 4b with the first section 4a extending within the mold, i.e. within the boundaries of the respective injection station 2a, 2b, and the further section 4b extending outside the mold. As can be seen from a comparison of figures 1a and 1b the first sections 4a are moveable in lateral direction as seen in figures 1a and 1b with respect to the further sections 4b. Thus, it is possible to move the first sections 1a into a molding position which is closer to the middle block 1 (figure 1a) and to align the first sections 4a and 4b as shown in figures 1b such that the sections 4a, 4b form a continuous longitudinal track.

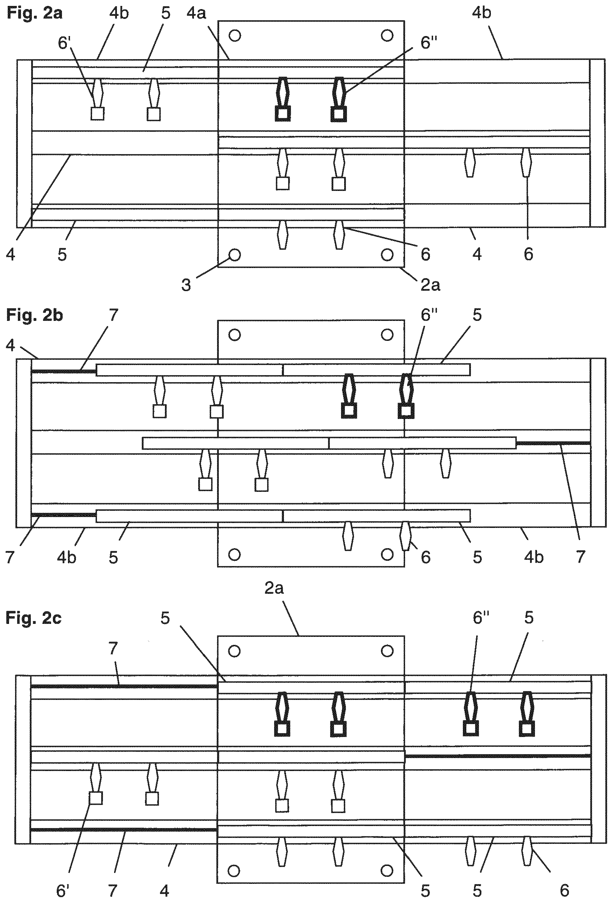

The design and function of the feeding bars is further shown in figures 2a to 2c depicting different manufacturing steps. In figure 2a lateral injection station 2a is shown with the three feeding bars 4 extending in the different levels. As can be seen, a section 4a of the feeding bars is located inside the boundaries defined by lateral injection station 2a with two additional sections 4b of the feeding bar 4 extending on either side of the mold. Mold bars 5 are guided in each of the feeding bars 4.

The length of the section 4a extending within the mold may be identical to the length of a mold bar 5. Thus, the mold bar 5 is then movable together with the feeding bar section 4a. To allow opening and closing of the mold cavities without interfering with other mold bars 5, the feeding bar section 4a extending within the mold may protrude laterally from the mold or may correspond to the width of the mold.

In the embodiment of figures 2a to 2c, a mold bar meanders through the device starting from the left hand side of the lower level feeding bar 4 to the right hand side of the upper level feeding bar 4. In the example embodiment depicted in the figures, a plastic part is manufactured in three steps comprising injection molding of a base body 6 in the lower level, injection molding the base body 6 to a semi-finished part 6' in the middle level and over-molding the semi-finished part 6' in the upper level to produce a finished part 6". In the example of figures 2a to 2c, two mold cavities are provided for each level of the injection station 2a. However, any other number of mold cavities may be provided according to the dimensions of the plastic parts.

If the sections 4a, 4b of the feeding bars 4 are aligned with each other as shown in figure 1b a mold bar 5 can be introduced into the injection station guided within the feeding bar 4, can be displaced sliding within the feeding bar 4 and can be removed from the injection station guided in the feeding bar 4. According to the present disclosure, the length of a feeding bar 4 is chosen such that at least two mold bars 5 may be received within the same feeding bar 4. This allows displacing a mold bar 5 within the feeding bar 4 by displacing a further mold bar 5 guided in the same feeding bar 4, wherein the mold bars 5 are in contact with each other, either directly or as an alternative indirectly via spacer elements (not shown). To reduce wear of the mold bars 5, the front face and the back face of the mold bars contacting each other (or spacers) may be hardened.

In the following, the path of a mold bar 5 and the production of a finished plastic part 6" are described in more detail with reference to figures 2a to 2c.

In the state of figure 2a an empty mold bar 5 is introduced into the lower level feeding bar 4 on the left hand side of figure 2a. Further, an additional molding bar 5 is provided within the lower level of the injection station 2a to form two base bodies 6. The right hand side of feeding bar 4 is empty in the lower level to allow discharging the mold bar 5 from the injection station. This process is shown in figures 2b and 2c. As can be seen in figure 2b a drive member 7 pushes on left mold bar 5 which directly abuts the right mold bar 5, thereby pushing mold bar 5 out of the injection station 2a while introducing mold bar 5 into injection station 2a. Figure 2c shows the state with the drive member 7 fully extended such that mold bar 5 is inserted into injection station 2a to allow injection molding of two new base bodies while mold bar 5 is discharged from injection station 2a to the right hand side of feeding bar 4.

The next step (not depicted) is a retraction of the drive member 7 to allow insertion of a new mold bar 5 into the left hand side of lower level feeding bar 4 and removal of mold bar 5 with the two base bodies 6 to the right hand side of the middle level. The result of this transfer step is shown in the middle level of figure 2a. The mold bars with the base bodies 6 are then reintroduced into the injection station 2a in the middle level to form by injection molding the semi-finished parts 6' which are then ejected from the injection station 2a by actuation of a further drive member 7 in the middle level. The semi-finished parts 6' produced in the middle level are again ejected from the injection station 2a and transferred from the left hand side of the middle level to the left hand side of the upper level. Finally, the semi-finished parts 6' are over-molded in the upper level of injection station 2a to form the finished parts 6" which are ejected from the injection station again by actuation of drive member 7 of the upper level.

As can be seen from figures 2a to 2c in each step of the manufacturing process axial transfer of mold bars is effected by a drive member 7 pushing on a mold bar 5 which is guided in a feeding bar 4 with the mold bar 5 in turn pushing on a further mold bar 5 guided in the same feeding bar 4.

The process of manufacturing the finished parts 6" may comprise one or more additional steps. For example, the mold cavities have to be opened and closed which may include movement of the feeding bar section(s) 4a as mentioned above. Further, instead of directly transferring a mold bar from one level to another level as described above and/or after removal of a mold bar from the upper level, a mold bar could be transferred to a cooling station, a heating station, a printing station and/or any other suitable machining station. Such additional stations may be disposed in one of the depicted levels, e.g. by extending one or more feeding bars in the guiding direction, or may be located separate from the injection station. Further, mold bars with base bodies 6 or semi-finished parts 6' may be transferred to a storage reservoir prior to further processing and/or molding.

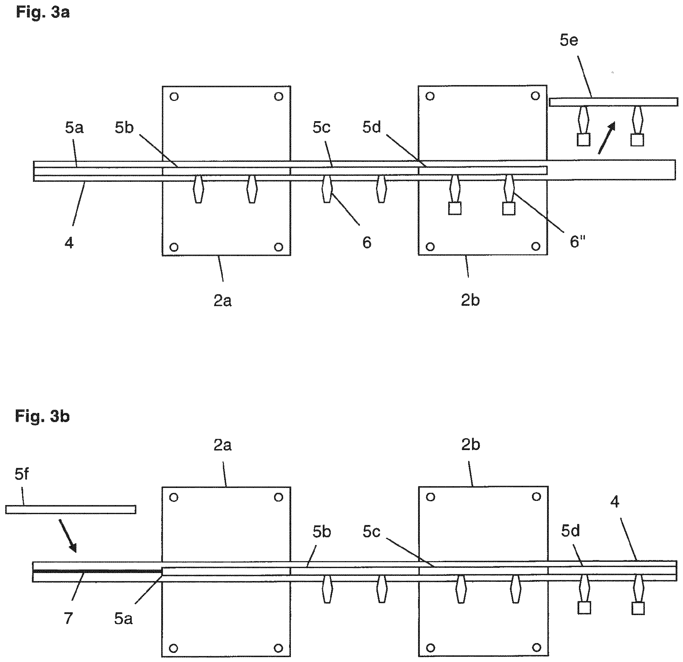

Figures 3a and 3b show an embodiment of the proposed plastic injection device with only one single feeding bar 4 extending through two injection stations 2a, 2b which are disposed next to each other.

In figure 3a an empty mold bar 5a is provided on the left hand side of the first injection station 2a. This first mold bar 5a abuts a second mold bar 5b which is positioned within the first injection station 2a to produce two base bodies 6 by injection molding. The second mold bar 5b in turn abuts a third mold bar 5c which is positioned between injection station 2a and injection station 2b in the embodiment of figure 3a. Thus, the base bodies 6 of mold bar 5c are allowed to cool or may be printed or otherwise treated between the injection stations 2a, 2b. As a further alternative, the injection stations 2a, 2b could be located directly next to each other, such that a mold bar removed from injection station 2a directly enters injection station 2b.

Mold bar 5c in turn abuts a fourth mold bar 5d which is located within the second injection station 2b to produce finished parts 6". Further, an additional mold bar 5e with two finished parts 6" is shown on the right hand side of injection station 2b as being removed from the feeding bar 4.

Figure 3b shows a state of the device in which a drive member 7 is its extended position, thereby moving empty mold bar 5a into the first injection station 2a. Mold bar 5a in turn pushes mold bar 5b with the two base bodies 6 out of the first injection station 2a and mold bar 5b pushes mold bar 5c into the second injection station 2b and mold bar 5c pushes mold bar 5d out of the second injection station 2b. In other words, actuation of one single drive member 7 is sufficient for simultaneously displacing four mold bars. Further, figure 3b shows a new empty mold 5f ready to be inserted into the portion of feeding bar 4 on the left hand side of the first injection station 2a.

It will be understood from the above embodiments, that variations of the process of manufacturing molded plastic parts are possible without departing from the scope of the present disclosure to displace a mold bar within a feeding bar by displacement of another mold bar which contacts (directly or indirectly) the mold bar.

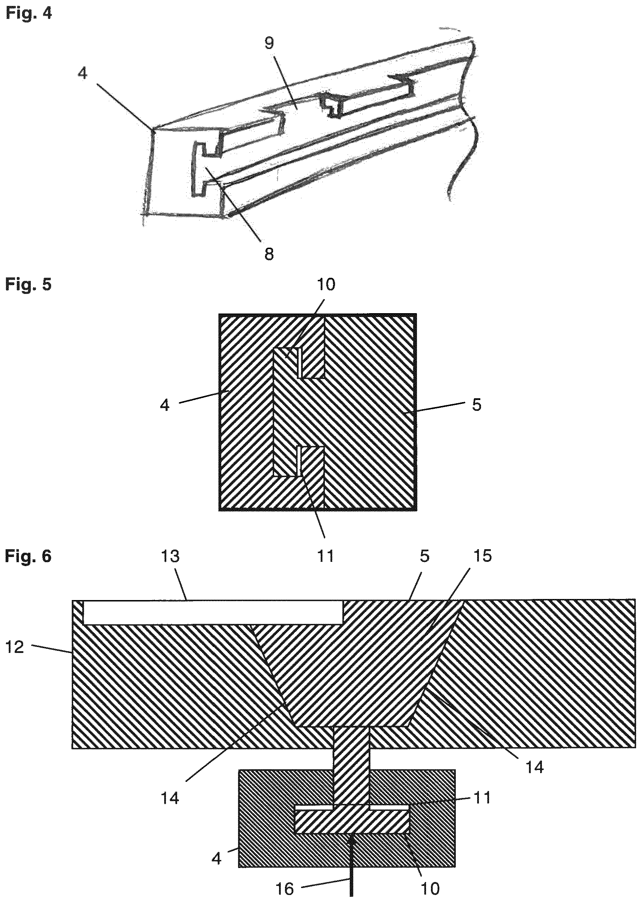

The design of the feeding bars 4 and the mold bars 5 is shown in figures 4 to 6 in more detail. The feeding bars 4 are longitudinal members extending in the guiding direction. A T-shaped guide slot 8 is provided in the feeding bars 4. Further, a clearance 9 may be provided in the feeding bars 4 to allow insertion of a mold bar 5 in a direction perpendicular to the guiding direction. Figure 5 shows that the mold bars comprise a T-shaped sliding block 10 which is guided in the T-shaped guide slot 8 of the feeding bars. The T-shaped sliding block 10 may be slightly smaller than the T-shaped guide slot 8 to provide a small air gap 11 between the feeding bar 4 and the mold bar 5. This allows displacement of the mold bar 5 with respect to the feeding bar 4 in a direction perpendicular to the guide direction.

Figure 6 shows in a sectional view a feeding bar 4 and a mold bar 5 guided therein. Further, figure 6 shows a mold 12 with a cavity 13 provided within the mold 12 and partially within the mold bar 5. The mold 12 has inclined surfaces 14 forming a tapered holder for the mold bar 5 which in turn is provided with a corresponding tapered support 15. As can be seen in figure 6 a plunger 16 or the like may displace mold bar 5 with respect to feeding bar 4 to close air gap 11 which lifts the tapered support 15 of the mold bar 5 from the tapered holder formed by inclined surfaces 14. In this lifted position displacement of the mold bar 5 in the guiding direction is possible without interference with the mold 12. On the other hand, in the position shown in figure 6 the mold bar 5 engages with the mold 12 and is precisely positioned by interaction of the inclined surfaces 14 with the tapered support 15.

## Claims

1. A plastic injection device comprising at least one injection station (2a, 2b) with a mold (12), a plurality of mold bars (5, 5a, 5b, 5c, 5d, 5e, 5f), which are movable relative to the mold (12), and a transfer system for moving mold bars (5, 5a, 5b, 5c, 5d, 5e, 5f) into and out of the mold (12), wherein the transfer system comprises a feeding bar (4) extending partially within and partially outside the mold (12) and arranged to receive and guide at least two mold bars (5, 5a, 5b, 5c, 5d, 5e, 5f) such that movement of a first mold bar within the feeding bar (4) may be caused by movement of a second mold bar within said feeding bar (4), and wherein the feeding bar (4) comprises a first section (4a) extending within the mold (12) and at least one further section (4b) extending outside the mold (12), **characterised in that** the first section (4a) is movable with respect to the at least one further section (4b) in a direction perpendicular to a longitudinal axis of the feeding bar (4) such that the first section (4a) can be aligned with the at least one further section (4b) to form a continuous feeding bar allowing displacement of the mold bars (5, 5a, 5b, 5c, 5d, 5e, 5f).

2. The plastic injection device according to claim 1, wherein each mold bar (5, 5a, 5b, 5c, 5d, 5e, 5f) comprises at least one T-shaped or dove tail sliding block (10), and wherein the feeding bar (4) comprises a guide slot (8) extending in a guiding direction and shaped to receive the at least one T-shaped or dove tail sliding block (10), optionally with play in at least one direction perpendicular to the guiding direction.

3. The plastic injection device according to claim 2, wherein the guide slot (8) comprises at least one clearance (9) shaped for insertion of the at least one T-shaped or dove tail sliding block (10) in a direction inclined, especially perpendicular, to the guiding direction.

4. The plastic injection device according to claims 2 or 3, wherein the mold (12) comprises two inclined support surfaces (14) forming a tapered holder for a mold bar (5, 5a, 5b, 5c, 5d, 5e, 5f), wherein each mold bar (5, 5a, 5b, 5c, 5d, 5e, 5f) comprises a corresponding tapered support (15), and wherein the transfer system further comprises a plunger (16) for lifting a mold bar (5, 5a, 5b, 5c, 5d, 5e, 5f) relative to the tapered holder and the feeding bar (4).

5. The plastic injection device according to any of claims 1 to 4, wherein the transfer system further comprises a drive member (7) dedicated to the feeding bar (4) for axial displacement of a mold bar (5, 5a, 5b, 5c, 5d, 5e, 5f) relative to said feeding bar (4).

6. The plastic injection device according to any of claims 1 to 5, wherein the transfer system further comprises an actuation member dedicated to the feeding bar (4) for displacement of a mold bar (5, 5a, 5b, 5c, 5d, 5e, 5f) perpendicular to said feeding bar (4).

7. The plastic injection device according to any of claims 1 to 6, wherein the feeding bar (4) extends from the mold (12) to at least one further mold, a mold bar insertion station, a mold bar removal station, a cooling station, a heating station, a printing station and/or a machining station.

8. A method for manufacturing plastic parts in an injection station (2a, 2b) with a mold (12) and a feeding bar (4) extending partially within and partially outside the mold (12), the method comprising the steps of:
a) introducing a first mold bar (5, 5a, 5b, 5c, 5d, 5e, 5f) into the feeding bar (4),
b) moving the first mold bar (5, 5a, 5b, 5c, 5d, 5e, 5f), which is guided in the feeding bar (4), in a first axial direction into the mold (12),
c) injection molding at least one plastic part (6, 6', 6"),
d) moving the first mold bar (5, 5a, 5b, 5c, 5d, 5e, 5f), which is guided in the feeding bar (4), together with the at least one plastic part (6, 6', 6") out of the mold (12),
e) removing the at least one plastic part (6, 6', 6") from the first mold bar (5, 5a, 5b, 5c, 5d, 5e, 5f) and/or removing the first mold bar (5, 5a, 5b, 5c, 5d, 5e, 5f) from the feeding bar (4), wherein movement of the first mold bar (5, 5a, 5b, 5c, 5d, 5e, 5f) during step a) and/or step d) is caused by axial movement of a second mold bar (5, 5a, 5b, 5c, 5d, 5e, 5f) which is guided in the same feeding bar (4) and acts directly or indirectly on the first mold bar (5, 5a, 5b, 5c, 5d, 5e, 5f),
wherein the feeding bar (4) comprises at least two sections (4a, 4b) wherein a first section (4a) extends within the mold (12) and the at least one further section (4b) extends outside the mold (12), **characterised in that** the first section (4a) is moved relative to the mold (12) prior to and/or after step c) and the first section (4a) is aligned with the at least one further section (4b) after step c).

9. The method according to claim 8, wherein during step a) and/or step d) the first mold bar (5, 5a, 5b, 5c, 5d, 5e, 5f) is in a transport position lifted relative to the feeding bar (4) and/or the mold (12) and during step c) in a centered position engaging a holder of the mold (12).

10. The method according to claims 8 or 9, wherein the first mold bar (5, 5a, 5b, 5c, 5d, 5e, 5f) is fed back after step e) into a position allowing re-introducing the first mold bar (5, 5a, 5b, 5c, 5d, 5e, 5f) into the feeding bar (4).

11. The method according to any of claims 8 to 10, wherein the first mold bar (5, 5a, 5b, 5c, 5d, 5e, 5f), which is guided in the feeding bar (4), is moved after step d) and prior to step e) to at least one further mold, a cooling station, a heating station, a printing station and/or a machining station, wherein said movement of the first mold bar (5, 5a, 5b, 5c, 5d, 5e, 5f) is effected by axial movement of the second mold bar (5, 5a, 5b, 5c, 5d, 5e, 5f) and/or a further mold bar (5, 5a, 5b, 5c, 5d, 5e, 5f) which is guided in the same feeding bar (4) and acts directly or indirectly on the first mold bar (5, 5a, 5b, 5c, 5d, 5e, 5f).

12. The method according to any of claims 8 to 11, wherein in step e) the first mold bar (5, 5a, 5b, 5c, 5d, 5e, 5f) is removed from the feeding bar (4) and thereafter moved to and introduced into a further feeding bar (4) and moved while being guided in the further feeding bar (4) to at least one further mold, a cooling station, a heating station, a printing station and/or a machining station, wherein said movement of the first mold bar (5, 5a, 5b, 5c, 5d, 5e, 5f) is effected by axial movement of the second mold bar (5, 5a, 5b, 5c, 5d, 5e, 5f) and/or a further mold bar (5, 5a, 5b, 5c, 5d, 5e, 5f) which is guided in the same further feeding bar (4) and acts directly or indirectly on the first mold bar (5, 5a, 5b, 5c, 5d, 5e, 5f).

## Patentansprüche

1. Kunststoffeinspritzvorrichtung, umfassend wenigstens eine Einspritzstation (2a, 2b) mit einer Gießform (12), einer Vielzahl von Formriegeln (5, 5a, 5b, 5c, 5d, 5e, 5f), die relativ zu der Gießform (12) bewegbar sind, und einem Übertragungssystem zum Bewegen von Formriegeln (5, 5a, 5b, 5c, 5d, 5e, 5f) in die und aus der Gießform (12), wobei das Übertragungssystem eine Zuführstange (4) umfasst, die sich teilweise innerhalb und teilweise außerhalb der Gießform (12) erstreckt und so angeordnet ist, dass sie wenigstens zwei Formriegel (5, 5a, 5b, 5c, 5d, 5e, 5f) aufnimmt und führt, so dass eine Bewegung eines ersten Formriegels innerhalb der Zuführstange (4) durch eine Bewegung eines zweiten Formriegels innerhalb der Zuführstange (4) bewirkt werden kann, und wobei die Zuführstange (4) einen ersten Abschnitt (4a), der sich innerhalb der Gießform (12) erstreckt, und wenigstens einen weiteren Abschnitt (4b) umfasst, der sich außerhalb der Gießform (12) erstreckt, **dadurch gekennzeichnet, dass** der erste Abschnitt (4a) in Bezug auf den wenigstens einen weiteren Abschnitt (4b) in einer Richtung lotrecht zu einer Längsachse der Zuführstange (4) bewegbar ist, so dass der erste Abschnitt (4a) an dem mindestens einen weiteren Abschnitt (4b) ausgerichtet werden kann, um eine kontinuierliche Zuführstange zu bilden, die eine Verschiebung der Formriegel (5, 5a, 5b, 5c, 5d, 5e, 5f) ermöglicht.

2. Kunststoffeinspritzvorrichtung nach Anspruch 1, wobei jeder Formriegel (5, 5a, 5b, 5c, 5d, 5e, 5f) mindestens einen T-förmigen oder Schwalbenschwanz-Gleitblock (10) umfasst und wobei die Zuführstange (4) einen Führungsschlitz (8) umfasst, der sich in einer Führungsrichtung erstreckt und zum Aufnehmen des mindestens einen T-förmigen oder Schwalbenschwanz-Gleitblocks (10) geformt ist, wahlweise mit Spiel in wenigstens einer Richtung lotrecht zu der Führungsrichtung.

3. Kunststoffeinspritzvorrichtung nach Anspruch 2, wobei der Führungsschlitz (8) wenigstens ein Spiel (9) umfasst, das zum Einführen des wenigstens einen T-förmigen oder Schwalbenschwanz-Gleitblocks (10) in einer zu der Führungsrichtung schrägen, insbesondere lotrechten Richtung, geformt ist.

4. Kunststoffeinspritzvorrichtung nach Anspruch 2 oder 3, **dadurch gekennzeichnet, dass** die Gießform (12) zwei schräge Stützflächen (14) umfasst, die einen verjüngten Halter für einen Formriegel (5, 5a, 5b, 5c, 5d, 5e, 5f) bilden, wobei jeder Formriegel (5, 5a, 5b, 5c, 5d, 5e, 5f) eine entsprechende verjüngte Stütze (15) umfasst, und wobei das Übertragungssystem ferner einen Druckstempel (16) zum Heben eines Formriegels (5, 5a, 5b, 5c, 5d, 5e, 5f) relativ zu dem verjüngten Halter und der Zuführstange (4) umfasst.

5. Kunststoffeinspritzvorrichtung nach einem der Ansprüche 1 bis 4, wobei das Übertragungssystem ferner ein der Zuführstange (4) zugeordnetes Antriebselement (7) zur axialen Verschiebung eines Formriegels (5, 5a, 5b, 5c, 5d, 5e, 5f) relativ zu der Zuführstange (4) umfasst.

6. Kunststoffeinspritzvorrichtung nach einem der Ansprüche 1 bis 5, wobei das Übertragungssystem ferner ein Betätigungselement umfasst, das der Zuführstange (4) zur Verschiebung eines Formriegels (5, 5a, 5b, 5c, 5d, 5e, 5f) lotrecht zu der Zuführstange (4) zugeordnet ist.

7. Kunststoffeinspritzvorrichtung nach einem der Ansprüche 1 bis 6, wobei sich die Zuführstange (4) von der Gießform (12) zu wenigstens einer weiteren Gießform, einer Formriegeleinsatzstation, einer Formriegelentnahmestation, einer Kühlstation, einer Heizstation, einer Druckstation und/oder einer Bearbeitungsstation erstreckt.

8. Verfahren zur Herstellung von Kunststoffteilen in einer Einspritzstation (2a, 2b) mit einer Gießform (12) und einer sich teilweise innerhalb und teilweise außerhalb der Gießform (12) erstreckenden Zuführstange (4), wobei das Verfahren die folgenden Schritte umfasst:
a) Einbringen eines ersten Formriegels (5, 5a, 5b, 5c, 5d, 5e, 5f) in die Zuführstange (4),
b) Bewegen des in der Zuführstange (4) geführten ersten Formriegels (5, 5a, 5b, 5c, 5d, 5e, 5f) in einer ersten axialen Richtung in die Gießform (12),
c) Spritzgießen wenigstens eines Kunststoffteils (6, 6', 6"),
d) Bewegen des in der Zuführstange (4) geführten ersten Formriegels (5, 5a, 5b, 5c, 5d, 5e, 5f) zusammen mit dem wenigstens einen Kunststoffteil (6, 6', 6") aus der Gießform (12),
e) Entnehmen des wenigstens einen Kunststoffteils (6, 6', 6") aus dem ersten Formriegel (5, 5a, 5b, 5c, 5d, 5e, 5f) und/oder Entnehmen des ersten Formriegels (5, 5a, 5b, 5c, 5d, 5e, 5f) aus der Zuführstange (4),
wobei die Bewegung des ersten Formriegels (5, 5a, 5b, 5c, 5d, 5e, 5f) während Schritt a) und/oder Schritt d) durch axiale Bewegung eines zweiten Formriegels (5, 5a, 5b, 5c, 5d, 5e, 5f) bewirkt wird, der in derselben Zuführstange (4) geführt wird und direkt oder indirekt auf den ersten Formriegel (5, 5a, 5b, 5c, 5d, 5e, 5f) wirkt,
wobei die Zuführstange (4) wenigstens zwei Abschnitte (4a, 4b) umfasst, wobei sich ein erster Abschnitt (4a) innerhalb der Gießform (12) und der wenigstens eine weitere Abschnitt (4b) außerhalb der Gießform (12) erstreckt, **dadurch gekennzeichnet, dass** der erste Abschnitt (4a) vor und/oder nach Schritt c) relativ zu der Gießform (12) bewegt wird und der erste Abschnitt (4b) nach Schritt c) an dem wenigstens einen weiteren Abschnitt (4b) ausgerichtet wird.

9. Verfahren nach Anspruch 8, wobei während Schritt a) und/oder Schritt d) der erste Formriegel (5, 5a, 5b, 5c, 5d, 5e, 5f) in eine Transportposition relativ zu der Zuführstange (4) und/oder der Gießform (12) angehoben ist und während Schritt c) in einer zentrierten Position in einen Halter der Gießform (12) eingreift.

10. Verfahren nach Anspruch 8 oder 9, wobei der erste Formriegel (5, 5a, 5b, 5c, 5d, 5e, 5f) nach Schritt e) in eine Position zurückgeführt wird, die ein erneutes Einbringen des ersten Formriegels (5, 5a, 5b, 5c, 5d, 5e, 5f) in die Zuführstange (4) ermöglicht.

11. Verfahren nach einem der Ansprüche 8 bis 10, wobei der erste Formriegel (5, 5a, 5b, 5c, 5d, 5e, 5f), der in der Zuführstange (4) geführt wird, nach Schritt d) und vor Schritt e) zu wenigstens einer weiteren Gießform, einer Kühlstation, einer Heizstation, einer Druckstation und/oder einer Bearbeitungsstation bewegt wird, wobei die Bewegung des ersten Formriegels (5, 5a, 5b, 5c, 5d, 5e, 5f) durch axiale Bewegung des zweiten Formriegels (5, 5a, 5b, 5c, 5d, 5e, 5f) und/oder eines weiteren Formriegels (5, 5a, 5b, 5c, 5d, 5e, 5f) erfolgt, der in derselben Zuführstange (4) geführt wird und direkt oder indirekt auf den ersten Formriegel (5, 5a, 5b, 5c, 5d, 5e, 5f) wirkt.

12. Verfahren nach einem der Ansprüche 8 bis 11, wobei in Schritt e) der erste Formriegel (5, 5a, 5b, 5c, 5d, 5e, 5f) aus der Zuführstange (4) entnommen und danach zu einer weiteren Zuführstange (4) bewegt und in diese eingebracht wird und unter Führung in der weiteren Zuführstange (4) zu mindestens einer weiteren Gießform, einer Kühlstation, einer Heizstation, einer Druckstation und/oder einer Bearbeitungsstation bewegt wird, wobei die Bewegung des ersten Formriegels (5, 5a, 5b, 5c, 5d, 5e, 5f) durch axiale Bewegung des zweiten Formriegels (5, 5a, 5b, 5c, 5d, 5e, 5f) und/oder einen weiteren Formriegel (5, 5a, 5b, 5c, 5d, 5e, 5f) erfolgt, der in derselben weiteren Zuführstange (4) geführt wird und direkt oder indirekt auf den ersten Formriegel (5, 5a, 5b, 5c, 5d, 5e, 5f) wirkt.

## Revendications

1. Dispositif d'injection de plastique comprenant au moins un poste d'injection (2a, 2b) avec un moule (12), une pluralité de barres de moule (5, 5a, 5b, 5c, 5d, 5e, 5f), qui sont mobiles par rapport au moule (12), et un système de transfert pour déplacer les barres de moule (5, 5a, 5b, 5c, 5d, 5e, 5f) vers l'intérieur et l'extérieur du moule (12), dans lequel le système de transfert comprend une barre d'alimentation (4) s'étendant partiellement à l'intérieur et partiellement à l'extérieur du moule (12) et agencée pour recevoir et guider au moins deux barres de moule (5, 5a, 5b, 5c, 5d, 5e, 5f) de telle sorte que le mouvement d'une première barre de moule à l'intérieur de la barre d'alimentation (4) peut être provoqué par un mouvement d'une deuxième barre de moule à l'intérieur de ladite barre d'alimentation (4), et dans lequel la barre d'alimentation (4) comprend une première section (4a) s'étendant à l'intérieur du moule (12) et au moins une autre section (4b) s'étendant à l'extérieur du moule (12), **caractérisé en ce que** la première section (4a) peut être déplacée par rapport à ladite au moins une autre section (4b) dans une direction perpendiculaire à un axe longitudinal de la barre d'alimentation (4) de telle sorte que la première section (4a) peut être alignée sur ladite au moins une autre section (4b) pour former une barre d'alimentation continue permettant le déplacement des barres de moule (5, 5a, 5b, 5c, 5d, 5e, 5f).

2. Dispositif d'injection de plastique selon la revendication 1, dans lequel chaque barre de moule (5, 5a, 5b, 5c, 5d, 5e, 5f) comprend au moins un bloc coulissant en forme de T ou en queue d'aronde (10), et dans lequel la barre d'alimentation (4) comprend une fente de guidage (8) s'étendant dans une direction de guidage et profilée pour recevoir ledit au moins un bloc coulissant en forme de T ou en queue d'aronde (10), éventuellement avec un jeu dans au moins une direction perpendiculaire à la direction de guidage.

3. Dispositif d'injection de plastique selon la revendication 2, dans lequel la fente de guidage (8) comprend au moins un dégagement (9) profilé pour l'insertion dudit au moins un bloc coulissant en forme de T ou en queue d'aronde (10) dans une direction inclinée, spécialement perpendiculaire, par rapport à la direction de guidage.

4. Dispositif d'injection de plastique selon les revendications 2 ou 3, dans lequel le moule (12) comprend deux surfaces de soutien inclinées (14) formant un soutien effilé pour une barre de moule (5, 5a, 5b, 5c, 5d, 5e, 5f), dans lequel chaque barre de moule (5, 5a, 5b, 5c, 5d, 5e, 5f) comprend un soutien effilé correspondant (15), et dans lequel le système de transfert comprend en outre un piston (16) pour lever une barre de moule (5, 5a, 5b, 5c, 5d, 5e, 5f) par rapport au soutien effilé et à la barre d'alimentation (4).

5. Dispositif d'injection de plastique selon l'une quelconque des revendications 1 à 4, dans lequel le système de transfert comprend en outre un élément d'entraînement (7) dédié à la barre d'alimentation (4) pour un déplacement axial d'une barre de moule (5, 5a, 5b, 5c, 5d, 5e, 5f) par rapport à ladite barre d'alimentation (4).

6. Dispositif d'injection de plastique selon l'une quelconque des revendications 1 à 5, dans lequel le système de transfert comprend en outre un élément d'actionnement dédié à la barre d'alimentation (4) pour un déplacement d'une barre de moule (5, 5a, 5b, 5c, 5d, 5e, 5f) perpendiculaire à ladite barre d'alimentation (4).

7. Dispositif d'injection de plastique selon l'une quelconque des revendications 1 à 6, dans lequel la barre d'alimentation (4) s'étend depuis le moule (12) jusqu'à au moins un autre moule, un poste d'insertion de barre de moule, un poste de retrait de barre de moule, un poste de refroidissement, un poste de chauffage, un poste d'impression et/ou un poste d'usinage.

8. Procédé de fabrication de pièces en plastique dans un poste d'injection (2a, 2b) avec un moule (12) et une barre d'alimentation (4) s'étendant partiellement à l'intérieur et partiellement à l'extérieur du moule (12), le procédé comprenant les étapes consistant à :
a) introduire une première barre de moule (5, 5a, 5b, 5c, 5d, 5e, 5f) dans la barre d'alimentation (4),
b) déplacer la première barre de moule (5, 5a, 5b, 5c, 5d, 5e, 5f), qui est guidée dans la barre d'alimentation (4), dans une première direction axiale dans le moule (12),
c) mouler par injection au moins une pièce en plastique (6, 6', 6"),
d) déplacer la première barre de moule (5, 5a, 5b, 5c, 5d, 5e, 5f), qui est guidée dans la barre d'alimentation (4), conjointement avec ladite au moins une pièce en plastique (6, 6', 6") à l'extérieur du moule (12),
e) retirer ladite au moins une pièce en plastique (6, 6', 6") de la première barre de moule (5, 5a, 5b, 5c, 5d, 5e, 5f) et/ou retirer la première barre de moule (5, 5a, 5b, 5c, 5d, 5e, 5f) de la barre d'alimentation (4),
dans lequel un mouvement de la première barre de moule (5, 5a, 5b, 5c, 5d, 5e, 5f) pendant l'étape a) et/ou l'étape d) est provoqué par un mouvement axial d'une deuxième barre de moule (5, 5a, 5b, 5c, 5d, 5e, 5f) qui est guidée dans la même barre d'alimentation (4) et agit directement ou indirectement sur la première barre de moule (5, 5a, 5b, 5c, 5d, 5e, 5f),
dans lequel la barre d'alimentation (4) comprend au moins deux sections (4a, 4b) dans lequel une première section (4a) s'étend à l'intérieur du moule (12) et ladite au moins une autre section (4b) s'étend à l'extérieur du moule (12), **caractérisé en ce que** la première section (4a) est déplacée par rapport au moule (12) avant et/ou après l'étape c) et la première section (4a) est alignée sur ladite au moins une autre section (4b) après l'étape c).

9. Procédé selon la revendication 8, dans lequel, pendant l'étape a) et/ou l'étape d), la première barre de moule (5, 5a, 5b, 5c, 5d, 5e, 5f) est dans une position de transport levée par rapport à la barre d'alimentation (4) et/ou au moule (12) et pendant l'étape c) dans une position centrée venant en prise avec un support du moule (12).

10. Procédé selon la revendication 8 ou 9, dans lequel la première barre de moule (5, 5a, 5b, 5c, 5d, 5e, 5f) est réalimentée après l'étape e) dans une position permettant une réintroduction de la première barre de moule (5, 5a, 5b, 5c, 5d, 5e, 5f) dans la barre d'alimentation (4).

11. Procédé selon l'une quelconque des revendications 8 à 10, dans lequel la première barre de moule (5, 5a, 5b, 5c, 5d, 5e, 5f), qui est guidée dans la barre d'alimentation (4), est déplacée après l'étape d) et avant l'étape e) vers au moins un autre moule, un poste de refroidissement, un poste de chauffage, un poste d'impression et/ou un poste d'usinage, dans lequel ledit mouvement de la première barre de moule (5, 5a, 5b, 5c, 5d, 5e, 5f) est effectué par un mouvement axial de la deuxième barre de moule (5, 5a, 5b, 5c, 5d, 5e, 5f) et/ou d'une autre barre de moule (5, 5a, 5b, 5c, 5d, 5e, 5f) qui est guidée dans la même barre d'alimentation (4) et agit directement ou indirectement sur la première barre de moule (5, 5a, 5b, 5c, 5d, 5e, 5f).

12. Procédé selon l'une quelconque des revendications 8 à 11, dans lequel, à l'étape e), la première barre de moule (5, 5a, 5b, 5c, 5d, 5e, 5f) est retirée de la barre d'alimentation (4) et, par la suite, déplacée vers et introduite dans une autre barre d'alimentation (4) et déplacée tout en étant guidée dans l'autre barre d'alimentation (4) vers au moins un autre moule, un poste de refroidissement, un poste de chauffage, un poste d'impression et/ou un poste d'usinage, dans lequel ledit mouvement de la première barre de moule (5, 5a, 5b, 5c, 5d, 5e, 5f) est effectué par un mouvement axial de la deuxième barre de moule (5, 5a, 5b, 5c, 5d, 5e, 5f) et/ou d'une autre barre de moule (5, 5a, 5b, 5c, 5d, 5e, 5f) qui est guidée dans la même autre barre d'alimentation (4) et agit directement ou indirectement sur la première barre de moule (5, 5a, 5b, 5c, 5d, 5e, 5f).
